# EUROPEAN PATENT APPLICATION

(11) **EP 4 822 459 A1**
(43) Date of publication of application: **14.10.2026**
(21) Application number: 25168940.2
(22) Date of filing: 07.04.2025
(51) Int. Cl.: G05B 19/042, G06F 9/451, G06F 16/957, G06F 16/958

(54) **IMAGE RENDERING USING A WEB BROWSER**

(71) Applicant: ABB SCHWEIZ AG, 5400 Baden (CH)
(72) Inventor: BORG, Mikael, 724 62 Västerås (SE); CURIA, Damiano, 8154 Oberglatt (CH)
(74) Representative: Kransell & Wennborg KB

(57) **Abstract**

The invention relates to an image rendering device, a method, a set of computer programs and computer program product for rendering images of a process control system as well as to a process control system with an image rendering device. The image rendering device comprises a web browser (BE) having a service hosting application (SHA) and a web assembly (WA), where the web assembly (WA) connects to a web server (WS) and obtains first image rendering instructions (IR1) for rendering a first image (I1), renders the first image (I1) in a first render target region (RT1) of a display area provided by the service hosting application (SHA), connects to the web server (WS) and obtains second image rendering instructions (IR2) for rendering a second image (I2), and renders the second image (I2) in a second render target region (RT1) of the display area.

## Description

### TECHNICAL FIELD

The invention relates to an image rendering device, a method, a set of computer programs and a computer program product for rendering images of a process control system as well as to a process control system comprising such an image rendering device.

### BACKGROUND

Process control systems may have a number of images that are used to display different parts and process states of the system.

It may be of interest to display such process graphics using a web application in a web browser, which may be done using legacy .NET modules.

A web application may host multiple types of services in a browser. The different types of services may be created using different technologies. One of the services that may be created is the rendering of process graphics. This service may be created using a web assembly hosting a legacy .NET application. Microsoft Blazor is an example of such a web assembly. Blazor is a framework built on .NET for creating interactive web applications. It leverages Web assembly (Blazor Web assembly) to run .NET code directly in the browser. However, Blazor web assembly applications were never intended to be used as web components, where a web component serves a specific part of the web application. To isolate the Blazor Web assembly from other instances of the same application the Blazor Web assembly is typically capsulated in iFrames.

How a Web assembly application, such as a Blazor web assembly, can be instantiated and used in iFrames is described below.
1. A user interacts with a browser and starts a web application that is capable of hosting different services for process control.
2. The user initiates a navigation request to a process graphics display.
3. The web application instantiates a new instance of an iFrame and loads the Web-assembly into the memory of the browser.
4. The web assembly loads requested graphics data from a web server and initiates a render and render updates.

However, for each navigation request a new web assembly is loaded into the browser memory. This operation takes time and consumes memory for each instance.

This may be problematic since there may be a lot of process graphics in a process control system, that needs to be displayed in a process graphics display using corresponding web assemblies.

Thus, there is a need for a faster displaying of images, such as process graphics, in a web browser using less memory space.

### SUMMARY

One object of the invention is therefore to render images using a web assembly in a web browser faster and using less memory space.

This object is according to a first aspect achieved by an image rendering device for rendering images of a process control system, the image rendering device comprising a processor configured to provide a web browser with a service hosting application and a web assembly, where the web assembly is operative to:
connect to a web server and obtain first image rendering instructions for rendering a first image,
render the first image in a first render target region of a display area provided by the service hosting application,
connect to the web server and obtain second image rendering instructions for rendering a second image, and
render the second image in a second render target region of the display area provided by the service hosting application.

The object is according to a second aspect achieved through a method of rendering images of a process control system, the method being performed by a web browser of an image rendering device, where the web browser comprises a service hosting application and a web assembly, the method comprising:
connecting, by the web assembly, to a web server and obtaining first image rendering instructions for rendering a first image,
rendering, by the web assembly, the first image in a first render target region of a display area provided by the service hosting application, connecting, by the web assembly, to the web server and obtaining second image rendering instructions for rendering a second image, and
rendering, by the web assembly, the second image in a second render target region of the display area provided by the service hosting application.

The object is according to a third aspect further achieved through a set of computer programs for rendering images of a process control system, the set of computer programs comprising computer program code which when run by a browser implemented using a processor in an image rendering device, causes the browser to provide a service handling application and a web assembly, where the web assembly is operative to:
connect to a web server and obtain first image rendering instructions for rendering a first image,
render the first image in a first render target region of a display area provided by the service hosting application,
connect to the web server and obtain second image rendering instructions for rendering a second image, and
render the second image in a second render target region of the display area provided by the service hosting application.

The object is according to a fourth aspect further achieved through a computer program product for rendering images of a process control system, the computer program product comprising a data carrier with the computer program code according to the third aspect.

The object is according to a fifth aspect achieved through a process control system comprising an image rendering device according to the first aspect.

According to a first variation of the first aspect, the service handling application is operative to load the web assembly and create the first and second render target regions.

According to a corresponding variation of the second aspect, the method further comprises loading, by the service handling application, the web assembly and creating, by the service handling application, the first and second render target regions.

According to a corresponding first variation of the third aspect, the service handling application is operative to create the web assembly and first and second render target regions.

The browser may comprise a browser engine.

According to a second variation of the first aspect, the browser engine is operative to receive, from the web server, the service hosting application and instructions for forming the web assembly and to run the service hosting application, where said instructions are used in the creating of the web assembly.

According to a corresponding second variation of the second aspect, the method further comprises obtaining, by the browser engine from the web server, the service hosting application and instructions for forming the web assembly and running, by the browser engine, the service hosting application and where said instructions are used in the loading of the web assembly.

Images may be created from configuration data. Images may also be updated by process data and/or user inputs. In this sense images may be seen as being dynamic.

According to a third variation of the first aspect, the web assembly is further operative to obtain first process data related to the first image from the web server, where the first process data emanates from the process control system, and render the first image with the first process data in the first render target region.

According to a corresponding third variation of the second aspect, the method further comprises obtaining by the web assembly, first process data related to the first image from the web server, where the first process data emanates from the process control system, and rendering, by the web assembly, the first image with the first process data in the first render target region.

According to a fourth variation of the first aspect, the web assembly is further operative to obtain second process data related to the second image from the web server, where the second process data emanates from the process control system, and render the second image with the second process data in the second render target region.

According to a corresponding fourth variation of the second aspect, the method further comprises obtaining, by the web assembly, second process data related to the second image from the web server, where the second process data emanates from the process control system, and rendering, by the web assembly, the second image with the second process data in the second render target region.

Process data may emanate from a device of the process control system, such as the process control server or a piece of process control equipment, such as a field device.

According to a fifth variation of the first aspect, the web assembly is further operable to receive a first navigation request, originating from a user, concerning the rendering of the first image and to receive a second navigation request, originating from the user, concerning the rendering of the second image and where the connection to the web server and obtaining of first image rendering instructions is made based on the reception of the first navigation instruction and the connection to the web server and obtaining of second image rendering instructions is made based on the reception of the second navigation instruction.

According to a corresponding fifth variation of the second aspect, the method further comprises receiving, by the web assembly, a first navigation request originating from a user, concerning the rendering of the first image and receiving, by the web assembly, a second navigation request. originating from the user, concerning the rendering of the second image, wherein the connection to the web server and obtaining of first image rendering instructions is made based on the reception of the first navigation instruction and the connection to the web server and obtaining of second image rendering instructions is made based on the reception of the second navigation instructions.

According to sixth variation of the first aspect, the service handling application is operative to receive the first navigation request from the user and forward it to the web assembly and to receive the second navigation request from the user and forward it to the web assembly.

According to a corresponding sixth variation of the second aspect, the method further comprises receiving, by the service handling application, the first navigation request from the user and forwarding it to the web assembly and to receiving, by the service handling application, the second navigation request from the user and forwarding it to the web assembly.

The first and second render target regions may be separated from each other in the service handling application using a first and second shadow document model, where the rendering of the first image is made in the first rendering target region using the first shadow document object model and the rendering of the second image in the second rendering target region is made using the second shadow document object model.

According to a further variation of the first aspect, the services handling application is further operative to instruct the web assembly, via the first shadow document object model, to link rendering of the first image to the first render target region and to instruct the web assembly, via the second shadow document object model, to link rendering of the second image to the second render target region.

According to a corresponding further variation of the second aspect, the method further comprises instructing, by the services handling application via the first shadow document object model, the web assembly to link rendering of the first image to the first render target region and instructing, by the services handling application via the second shadow document object model. the web assembly to link rendering of the second image to the second render target region.

The web assembly may be a Blazor web assembly.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a process control system comprising a process control server, a web server, an image rendering device and process control equipment in a process section,
fig. 2 shows a block schematic of the image rendering device,
fig. 3 shows a number of method steps in a first optional part of an image rendering method being performed by a web browser of the image rendering device,
fig. 4 schematically shows the web browser comprising a browser engine, a service hosting application and a web assembly,
fig.5 shows a number of method steps in a second part of the image rendering method being performed by the web assembly,
fig. 6 shows a number of method steps in a third optional part of the image rendering method being performed by the web assembly,
fig. 7 shows a signal chart of signals exchanged between the browser engine/service hosting application, the web assembly, the web server and the process control server in the image rendering method,
fig. 8 shows a display area with a first and second render target region, and
fig. 9 shows a computer program product in the form of a CD ROM disc with a computer program implementing the service hosting application and web assembly.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards a process control system and more particularly towards the display of images in or for the process control system.

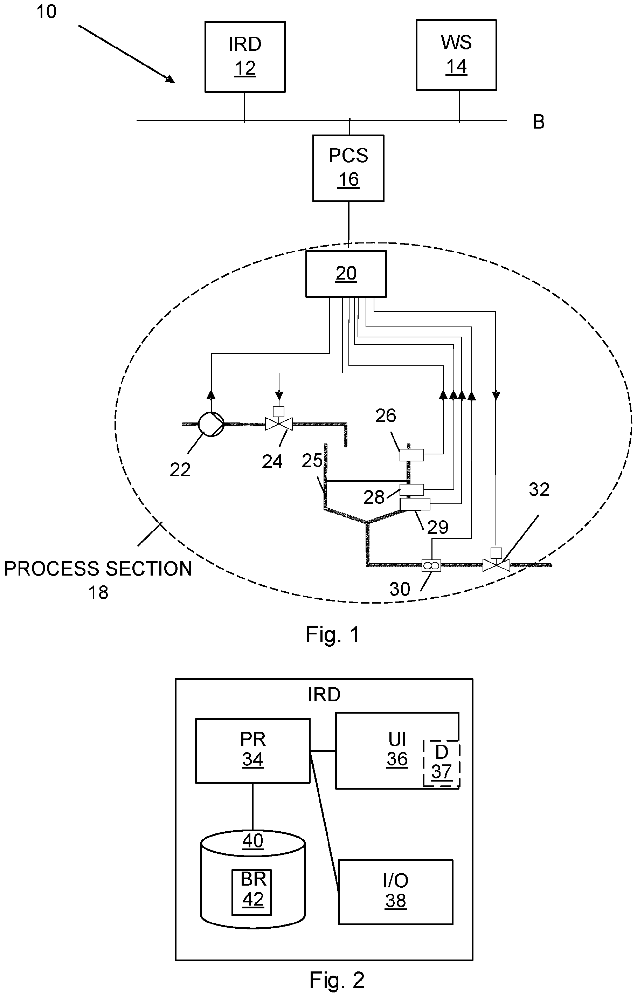

Fig. 1 schematically shows a process control system 10 for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. There exist countless other processes. Normally there may in such a system be one or more controllers having some local software for controlling one or more pieces of process control equipment or one or more field devices. The process control equipment may comprise equipment that influence or measure different properties of the technical process. A piece of process control equipment may for instance be a pump, a motor, a valve, etc. A process, or a part of a process, may be controlled via a server, which then typically communicates with a controller for providing local control. The process may be monitored through an operator terminal or workstation, which communicates with the server. Such a workstation or operator terminal is also a form of user terminal.

It may be of advantage to display process graphics for an operator terminal using a web browser. Browsers are good to use because they can be easily implemented in different environments. A browser is readily available in a number of different types of terminals, such as smart phones, laptop computers and desktop computers. The use of browser technology thus provides a high degree of freedom concerning where process graphics is to be displayed.

An operator terminal can for this reason employ a browser for displaying process control graphics, such as faceplates. It can for this reason communicate with a web server in order to obtain the process graphics and perhaps also process data associated with the process graphics.

Thus, the operator terminal may display process graphics using a web browser. However, process graphics may also be rendered by other devices that are not involved in process control. Therefore, an operator terminal is one type of image rendering device. In fig. 1, the system 10 therefore includes an image rendering device IRD 10, which is a device having a web browser. In this special case the image rendering device 12 is also an operator terminal. There is also a web server WS 14 with which the image rendering device 12, or rather the web browser of the image rendering device 12, is in contact. In the example in fig. 1 the image rendering device 12 and the web server 14 are both connected to a bus B.

There is furthermore a process control server PCS 16 connected to the bus B, which process control server 16 comprises a control function for controlling the process. The control performed by the process control server 16 could be performed using one or more controllers. As an example, one controller 20 (Process Controller or Programmable Logic Controller (PLC)) is shown.

In the control there may be a number of pieces of process control equipment. As an example, the controller 20 is shown as being connected to process control equipment in a process section 18 for controlling a part of the industrial process, which process section 18 includes a first inlet pipe leading to a tank 25 and a second outlet pipe leaving the tank 25. In the first pipe there is provided a pump 22 that pumps fluid into the first pipe as well as a first valve 24. In the tank 25 there are provided two level sensors 26 and 28 and in the outlet pipe there is provided a flow meter 30 and a second valve 32. There is also a temperature sensor 29 in the tank 25. The pipes, tank, valves and sensors are examples of process control equipment. The level sensors 26 and 28 measure the physical quantity liquid volume, the temperature sensor measures the physical quantity liquid temperature and the flow meter 30 measures the physical quantity volumetric flow rate of the liquid. The controller 20 may receive control input values from the pump 22, level sensors 26 and 28 and temperature sensor 29 and regulate the liquid level in the tank 25 based on these control input values through controlling the first valve 24. It also receives control input values from the flow meter 30 and temperature sensor 29 and controls the second valve 32 for regulating the output fluid flow.

The above-described control is merely an example of one type of control in a process control example. It should be realized that several different other types of control are possible and that several other types of physical quantities can be measured.

Moreover, the process control system may comprise several different sections with control equipment.

It should here be realized that while it is advantageous that the web server 14 is provided in the same environment as the process control server 16, which is exemplified through them both being connected to the bus B, the same is not necessarily true for the image rendering device 12. The image rendering device 12 may communicate with the web server 14 in a number of different ways. It may for instance connect to the web server 14 via an intranet and/or the Internet. It is also possible that the communication involves wireless communication, for instance via a wireless communication network like a mobile communication network or a WiFi network.

Fig. 2 schematically shows one realization of the image rendering device IRD 12. There is a processor PR 34 and a data storage 40 with computer program instructions 42 that, when executed by the processor 34, implements image rendering functionality. More particularly, the computer program instructions comprise computer program instructions implementing a web browser BR 42. The web browser 42comprises a browser engine (not shown). In some variations the web browser 42 may also store a service hosting application and a web assembly, where the web assembly may be a part of or separate from the service hosting application.

The image rendering device 12 also comprises an input/output (I/O) interface 38 for communication with other entities in the process control system like the web server 14. Finally, there is a user interface UI 36 which comprises a display D 37 for displaying information about the process and the process control system to a user, such as an operator. The display 37 may be a touch screen display allowing the user to input data and commands as well as to move a pointer or to select objects in different screens. It should be realized that the user interface 36 may also or instead comprise other means of allowing user input, such as a mouse or trackball, a keyboard or a keypad. As was mentioned above, the image rendering device 12 may be a wireless image rendering device, for instance in the form of a smartphone, in which case the communication interface may be a wireless communication interface for communicating via a wireless communication network.

When performing control in the process control system, a great number of display areas may be used to display different sections of the process control system as well as the status or state of the process, alarms and details of the pieces of process control system. Thus, there may be a great number of images existing in the process control system being used. Moreover, a number of images of display objects, such as faceplates, may be provided in a view or display area. The display objects may be objects of a suitable form, being displayed by the web browser 42. The web browser 42 may for this reason use a service handling application, for instance in the form of an HTML (HyperText Markup Language) application, which application may comprise a service that refers to different display objects, such as SVG (Scalable Vector Graphics) objects that are displayed at different regions of the display area.

It should here be realized that images may be created from configuration data. Images may also be updated by process data and/or user inputs. In this sense images are dynamic.

This type of displaying has in some cases been made through the application hosting a web assembly, such as Microsoft Blazor. Blazor can then be used for rendering an image such as a graphical symbol. However, such a web assembly is a framework built on .NET for creating interactive web applications. It leverages Web assembly (Blazor Web assembly) to run .NET code directly in the browser. To isolate the Web assembly from other instances of the same application it is traditionally encapsulated in iFrames. However, if the web assembly is to be used to render two different images, then it is necessary to load a web assembly encapsulated in a different instance of iFrame for each such image.

This operation takes time and consumes memory, which may be in shortage in mobile devices such as smart phones.

There is thus a need for addressing the problem of low speed and memory usage caused by several instances of a web assembly for rendering such images of a display area.

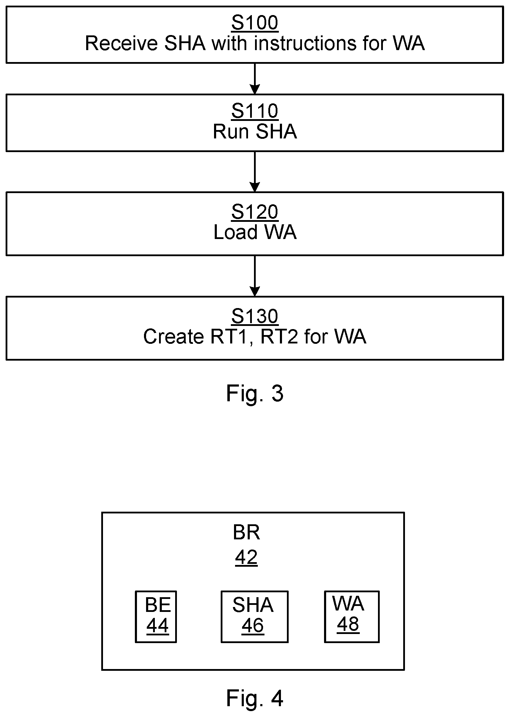

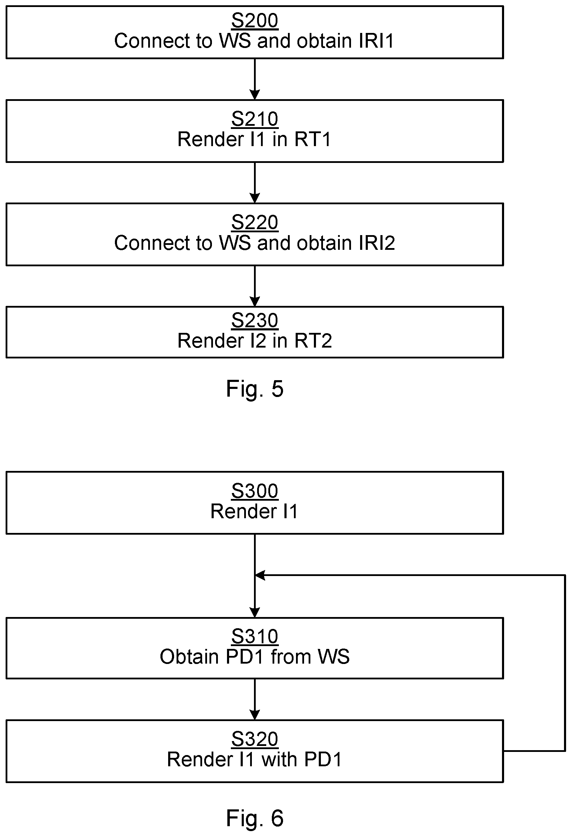

How this problem may be addressed according to a first embodiment will now be described also with reference being made to fig. 3, 4 and 5, where fig. 3 shows a number of steps in an optional first part of an image rendering method, fig. 4 shows the memory of the image rendering device after the steps of the first part have been carried out and fig.5 shows a number of steps in a second part of the image rendering method, where the image rendering method is a method for rendering images of the process control system.

The operation of the first part may start by the browser engine of the web browser 42 connecting to the web server 14 for receiving the service hosting application SHA and instructions for implementing the web assembly WA, S100, which may be done through downloading the application SHA, for instance in the form of an HTML file, from the web server 14 to the browser 42. The instructions for implementing the web assembly WA may in this case be provided as a part of the service hosting application SHA. The instructions may as an alternative be provided for use by the service hosting application, for instance in a separate file.

Thereafter the browser engine of the web browser 42 runs the service hosting application SHA, S110., It thus loads the HTML file and then runs the computer program code of this file. The service hosting application SHA may include several services, one of which may be the display of process graphics. When the service hosting application SHA is being run, and a process graphics display service is selected, the general outline of a display area may be provided, in which display area a number of images are to be displayed, which images may be graphical objects of elements in the process control system, for instance of pieces of process control equipment in the process section 18 shown in fig. 1. Thus, the images are images of the process control system 10 and the display area is provided by the service hosting application SHA. Instructions in the service hosting application SHA may additionally cause the browser 42 to load and run the web assembly WA, S120. The instructions received by the browser engine are in turn used in the creating of the web assembly. More particularly, the service handling application 46 of the browser 42 causes a single instance of the web assembly WA to be run to serve the whole display area. Thereby, the browser 42 makes the image rendering device 12 load and run a web assembly WA using the web assembly instructions received from the web server 14.

The web assembly WA may be provided as a web assembly service. The web assembly WA may additionally be a Blazor web assembly.

After the web assembly WA has been loaded, the service hosting application SHA may create render target regions of the display area for the web assembly WA, in which render target regions images are to be rendered. There is here created a render target region for each image that is to be displayed in the display area. A render target region is a region of the display image that is reserved for a corresponding image. A render target region may be created using ShadowDOM, where DOM is an acronym for Document Object Model. Thus, the render target regions may be separated in the service hosting application SHA through the use of ShadowDOMs. Thereby it can be seen that the render target regions are provided by the service hosting application SHA.

The render target regions are to be used by the single web assembly WA for displaying images in the display area. In an example to be given later two images will be rendered. As two images are to be displayed according to the example given above, the service hosting application SHA creates a first and a second render target region RT1, RT2 for the web assembly WA, S130. More particularly, the first and second render target regions RT1, RT2 are separated from each other in the service handling application SHA using the first and second ShadowDOM. The web assembly WA may also be instructed, via the first ShadowDOM, to link rendering of a first image I1 to the first render target region RT1 and, via the second ShadowDOM, to link rendering of a second image to the second render target region RT2. Thus, only one instance of a web assembly WA is created and this web assembly is to be used to render images in all render target regions of the display area. Thereby a single web assembly is loaded, which is responsible for rendering all the images in the display area

It should here be realized that the service handling application SHA does not necessarily have to be downloaded to the web browser 42. The web browser 42 may be provided with or can be connected to it from the start. It is also possible that the web browser 42 is provided with or can connect to the web assembly WA from the start. The render target regions may likewise be predefined.

Fig. 4 schematically shows the browser BR 42 after the downloading of the service hosting application and the web assembly. As can be seen the browser then comprises the browser engine BE 44, the service hosting application SHA 44 and the web assembly WA 48.

After the web assembly 48 and render target regions have been created, the operation of the web assembly 48 according to the second part of the image display method may be the following for the example of the first and second render target regions RT1, RT2, which operation is outlined in the method steps of fig. 5. s

The web assembly 48 may connect to the web server 14 and obtain first image rendering instructions IR1 for rendering a first image I1, S200, which first image rendering instructions IR1 may be provided in a suitable format such as SVG. Thereafter, the web assembly 48 may use these instructions to render the first image I1 in the first render target region RT1, S210. The image rendering instructions IR1 may be drawing instructions, such as SVG instructions, and the web assembly may use these instructions to draw the first image I1 in the first render target region RT1 based on the first shadowDOM or as defined by the first ShadowDOM, where the first image I1 may be an SVG image. Thus, the rendering of the first image I1 is made in the first rendering target region RT1 using the first shadowDOM. The first image I1 may additionally be a graphical object that is a symbol of an element in the process control system, such as a piece of process control equipment. It may for instance be a face plate, such as a face plate representing the tank 25.

The web assembly 48 may also connect to the web server 14 and obtain second image rendering instructions IR2, S220 for rendering a second image I2, and use these instructions to render the second image I2 in the second render target region RT2, S230. The image rendering instructions may again be drawing instructions, such as SVG instructions, used to draw the second image I2 in the second render target region based on the second ShadowDOM or as defined by the second ShadowDOM. Thus, the rendering of the second image I2 in the second rendering target region RT2 is made using the second shadowDOM. The second image I2 may be a graphical object associated with another element in the process control system, such as another piece of process control equipment.

It should be realized that the images being rendered need not be SVG images. As an example, the images may be rendered using Canvas.

As the images may correspond to elements involved in the control performed in the process control system there may additionally be process data associated with one or more of these elements. It may be desirable to also display such process data together with the images. How the web assembly 48 may do this for the first image I1 will now be described with reference being made to fig. 6, which shows steps in an optional third part of the image display method.

The operation involves the web assembly 48 rendering the first image I1 in the first render target region RT1, S300, which is done in the same way as described in relation to fig. 5. As long as the first image I1 is being rendered, the process control server 16 may provide the web server 14 with first process data PD1, which first process data PD1 the web server 14 then forwards to the web assembly 48. The web assembly 48 thus obtains first process data PD1 from the web server 14, S310, which first process data PD1 is related to the first image I1 and emanates from the process control system 10. After having received the first process data PD1, the web assembly 48 then renders it in the first render target region RT1 together with the first image I1, S320. It may as an example display it inside the first image I1. The web assembly 48 may then be continuously updated with first process control data PD1 as long as the first image I1 is being displayed. Thereby, after having rendered the first image I1 with the first process data PD1, the web assembly 48 returns and obtains first process data PD1 anew, which is then rendered together with the first image I1. Thus, the web assembly 48 may operate in a process data updating loop in which the first process data PD1 is continuously updated.

If the second image I2 is to include second process data, the web assembly may perform a similar operation with regard to this second Thus in this case the web assembly 48 would obtain second process data related to the second image I2 from the web server 14, where the second process data emanates from the process control system 10, and render the second image I2 with the second process data in the second render target region RT2.

It should here be realized that it is possible to display images without process data. The rendering of process data is thus optional.

It can in this way be seen that different images can be rendered with the use of a single web assembly. This saves time as well as memory space.

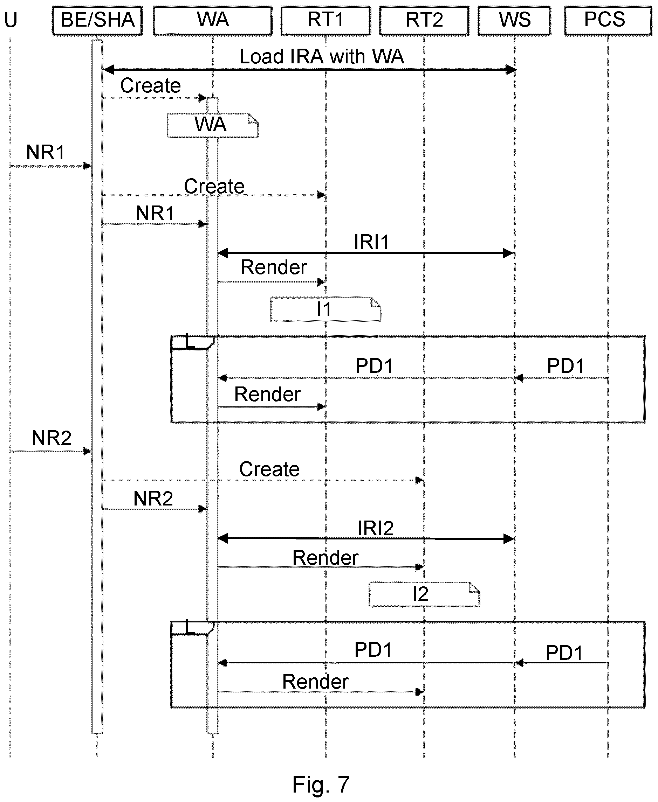

How the image rendering can take place will now also be described in relation to fig. 7, which shows a signal chart of signals exchanged between the browser engine/service handling application, web assembly, render target regions, web server and process control server.

The operation of the image rendering device could be described in the following way:
The service hosting application 46 together with instructions for generating the web assembly 48 may be provided to the browser engine 44 from the web server 12. A user may then interact with the browser engine 44 and start the application 46. After having been started in the browser 42, the application 46 may then create or load a single instance of the web assembly 48, where the web assembly 48 is created using the received web assembly instructions.

When the web assembly 48, which may be provided in the form of a service, is up and running, a user U may initiate a navigation request to a process graphics display area. More particularly, the user U may send navigation requests to the application 46 concerning displaying images in the display area.

A first navigation request NR1 may be a request for displaying the first image I1.

Thus, the service handling application 46 receives the first navigation request NR1 from the user U. After having received the first navigation request NR1, the application 46 may create the first render target region RT1 for the web assembly 48 based on the first ShadowDOM. It may also forward the first navigation request NR1 to the web assembly 48. Thereby the web assembly 48 receives a first navigation request NR1 that emanates from the user U and that concerns rendering of the first image I1. Based on the reception of the first navigation request NR1, the web assembly 48 may then connect to the web server 14 and ask for image rendering instructions for rendering the first image I1. As a response, it may then receive first image rendering instructions IRI1 from the web server 14, which instructions may be provided in an SVG file. Thus, the web assembly 48 obtains the first image rendering instructions IRI1 based on the reception of the first navigation instruction NR1. Thereby, the web assembly 48 may load display data from the web server 14. The web assembly 48 then uses the first image rendering instructions IR1 for drawing the first image I1 in the first render target region RT1.

As was mentioned earlier, the first image I1 may be a face plate associated with an element in the process control system, such as the tank 25. It is possible that the process control server 16 provides process data associated with this element. Therefore, the process control server 16 may provide the web server 14 with first process data PD1, which first process data PD1 the web server 14 forwards to the web assembly 48. After having received the first process data PD1, the web assembly 48 renders it in the first render target region RT1 together with the first image I1. The web assembly 48 may as an example display the first process data PD1 inside the first image I1. The web assembly 48 may be continuously updated with first process data PD1 as long as the first image I1 is being displayed. Thus, the web assembly 48 may operate in a process data updating loop L in which the first process data PD1 is continuously updated.

The user U may also send a second navigation request NR2 to the service handling application 46, which may be a request for displaying the second image I2.

Thus, the service handling application 46 may receive the second navigation request NR2 from the user U. After having received the second navigation request NR2, the application 46 may create the second render target region RT2 based on the second ShadowDOM. It may also forward the second navigation request NR2 to the web assembly 48. Thereby the web assembly 48 receives a second navigation request NR2 that emanates from the user U and that concerns rendering of the second image I2. Based on the reception of the second navigation request NR2, the web assembly 48 may then connect to the web server 14 and ask for image rendering instructions for rendering the second image I2. As a response it may then receive second image rendering instructions IRI2 from the web server 14, which instructions may also be provided in an SVG file. Thus, the web assembly 48 obtains the second image rendering instructions IRI2 based on the reception of the second navigation request NR2. The web assembly 48 then uses the second image rendering instructions IR2 for drawing the second image I2 in the second render target region RT2.

There may also here be process data associated with the element that the second image I2 represents. Therefore, the process control server 16 may provide the web server 14 with second process data PD2 linked to a second element with which the second image I2 is associated, which second process data PD2 the web server 14 then forwards to the web assembly 48. After having received the second process data PD1, the web assembly 48 renders it in the second render target region RT2 together with the second image I2. It may as an example display it inside the second image I2. The web assembly 48 may be continuously updated with second process data PD2 as long as the second image I2 is being displayed. Thus, the web assembly 48 may operate in a process data updating loop L in which the second process data PD2 is continuously updated.

It can thereby be seen that the web assembly 48 uses the given render targets RT1, Rt2 to render the images I1, I2 and use process data PD1, PD2 for rendering updates.

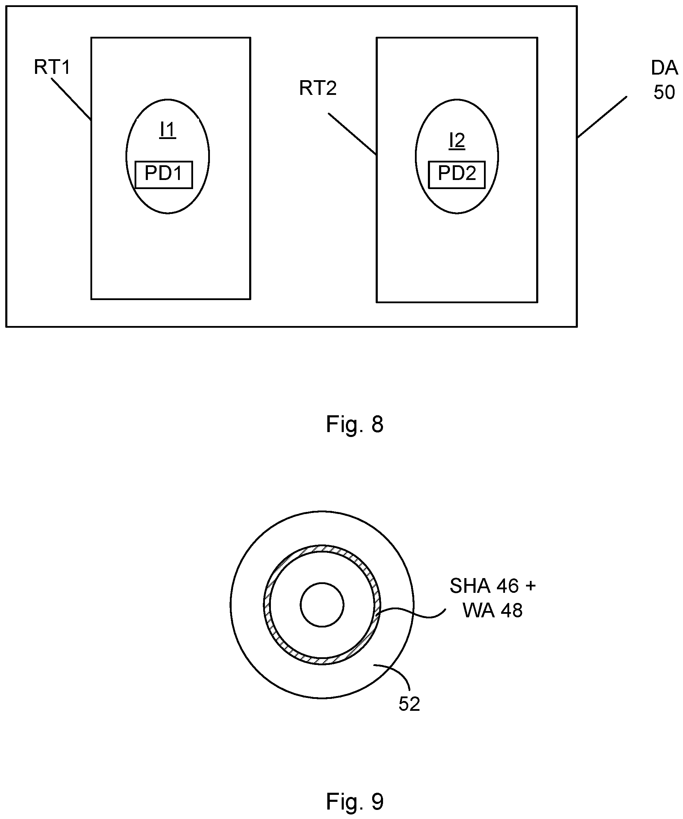

Fig. 8 shows a simplified view of the display area DA 50 with the first and second render target regions RT1, RT2, where the first image I1, shaped as an ellipse, includes the first process data D1 and the second image I2, also shaped as an ellipse, includes the second process data PD2.

It should here be realized that the elliptic shape has only been used in order to simplify the drawing. The image may have any shape or form, for instance any shape of form used for a face plate.

Thus, instead of creating a new instance and loading the web assembly multiple times, one for each image in the display area, the service hosting application loads the web assembly once and creates viewports for the web assembly to render to, one for each image.

It can thus be seen that a single instance of the web assembly is loaded into the browser/ browser tab. The service hosting application provides mechanisms for registering a render target for the web assembly and input from the render targets are sent to the web assembly. The web assembly keeps the state of all render targets and updates the targets when necessary.

Having a single web assembly serving multiple render targets reduces the initial loading time of the graphic display area with its separate images and reduces the amount of memory used.

dAs was mentioned earlier, the browser of the image rendering device may download the service hosting application and web assembly from the web server for being implemented in the browser. The service hosting application and web assembly may thus be provided as two computer programs that perform some of the previously described operations.

The service hosting application with the web assembly may also be provided on a computer program product, for instance on a computer program product in the form of a non-transitory computer readable storage medium or data carrier, like a CD ROM disc, memory stick or memory card, carrying the service hosting application and the web assembly. One such computer program product in the form of a CD ROM disc 52 with the above-mentioned computer program code of the service hosting application SHA 46 and web assembly WA 48 is schematically shown in fig. 9.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. An image rendering device (12) for rendering images of a process control system (10), the image rendering device comprising a processor (34) configured to provide a web browser (42) with a service hosting application (46) and a web assembly (48),
said web assembly (48) being operative to:
connect to a web server (14) and obtain first image rendering instructions (IR1) for rendering a first image (I1),
render the first image (I1) in a first render target region (RT1) of a display area (50) provided by the service hosting application (46),
connect to the web server (14) and obtain second image rendering instructions (IR2) for rendering a second image (I2), and
render the second image (I2) in a second render target region (RT1) of the display area (50) provided by the service hosting application (46).

2. The image rendering device (12) according to claim 1, wherein the first and second render target regions (RT1, RT2) are separated from each other in the service handling application (46) using a first and second shadow document model, where the rendering of the first image (I1) is made in the first rendering target region (RT1) using the first shadow document object model and the rendering of the second image (I2) in the second rendering target region (RT2) is made using the second shadow document object model.

3. The image rendering device (12) according to claim 1 or 2, the web assembly (48) being further operative to obtain first process data (PD1) related to the first image (I1) from the web server (14), said first process data (PD1) emanating from the process control system (10), and render the first image (I1) with the first process data (PD1) in the first render target region (RT1).

4. The image rendering device (12) according to any previous claim, the web assembly (48) being further operative to obtain second process data (PD2) related to the second image (I2) from the web server (14), said second process data (PD1) emanating from the process control system (10), and render the second image (I2) with the second process data (PD2) in the second render target region (RT2).

5. The image rendering device (12) according to any previous claim,
wherein the web assembly (48) is a Blazor web assembly.

6. The image rendering device (48) according to any previous claim, the web assembly being further operable to receive a first navigation request (NR1) originating from a user (U), concerning the rendering of the first image (I1) and to receive a second navigation request (NR2), originating from the user (U), concerning the rendering of the second image (I2) and where the connection to the web server (14) and obtaining of first image rendering instructions (IR1) is made based on the reception of the first navigation instruction (NA1) and the connection to the web server (14) and obtaining of second image rendering instructions (IR2) is made based on the reception of the second navigation instruction (NA2).

7. The image rendering device (12) according to any previous claim,
wherein the service handling application (46) is operative to load the web assembly (48) and create the first and second render target regions (RT1, RT2).

8. The image rendering device (12) according to claim 7, the web browser (42) further comprising a browser engine (44) operative to receive, from the web server (14), the service hosting application (46) and instructions for forming the web assembly (48) and to run the service hosting application (46), where said instructions are used in the creating of the web assembly (48).

9. A process control system (10) comprising an image rendering device (12) according to any previous claim.

10. A method of rendering images of a process control system (10), the method being performed by a web browser (42) of an image rendering device (12), said web browser comprising a service hosting application (46) and a web assembly (48), the method comprising:
connecting (S200), by the web assembly (48), to a web server (14) and
obtaining first image rendering instructions (IR1) for rendering a first image (I1),
rendering (S210), by the web assembly (48), the first image (I1) in a first render target region (RT1) of a display area (50) provided by the service hosting application (46),
connecting (S220), by the web assembly (48), to the web server (14) and obtaining second image rendering instructions (IR2) for rendering a second image (I2), and
rendering (S230), by the web assembly (48), the second image (I2) in a second render target region (RT1) of the display area (50) provided by the service hosting application (46).

11. The method according to claim 10, further comprising obtaining (S310), by the web assembly (48), first process data (PD1) related to the first image (I1) from the web server (14), said first process data (PD1) emanating from the process control system (10), and rendering (S320), by the web assembly (48), the first image (I1) with the first process data (PD1) in the first render target region (RT1).

12. The method according to claim 10 or 11, further comprising obtaining, by the web assembly (48), second process data (PD2) related to the second image (I2) from the web server (14), said second process data (PD2) emanating from the process control system (10), and rendering, by the web assembly (48), the second image (I2) with the second process data (PD2) in the second render target region (RT2).

13. The method according to any of claims 10 - 12, further comprising loading (S120), by the service handling application (46), the web assembly (48) and creating (S130), by the service handling application (46), the first and second render target regions (RT1, RT2).

14. The method according to any of claims 10 - 13, the web browser (42) further comprising a browser engine (44) and the method further comprising obtaining (S100), by the browser engine (44) from the web server (14), the service hosting application and instructions for forming the web assembly and running (S110), by the browser engine (44), the service hosting application (46) and where said instructions are used in the loading of the web assembly (48).

15. A set of computer programs for rendering images of a process control system (10), the set of computer programs comprising computer program code which when run by a browser (42) implemented using a processor (32) in an image rendering device (12), causes the browser (42) to provide a service handling application (46) and a web assembly (48), where the web assembly (48) is operative to:
connect to a web server (14) and obtain first image rendering instructions (IR1) for rendering a first image (I1),
render the first image (I1) in a first render target region (RT1) of a display area (50) provided by the service hosting application (46),
connect to the web server (14) and obtain second image rendering instructions (IR2) for rendering a second image (I2), and
render the second image (I2) in a second render target region (RT1) of the display area (50) provided by the service hosting application (46).

16. The set of computer programs according to claim 15, wherein the service handling application is operative to create the web assembly (48) and first and second render target regions (RT1, RT2).

17. A computer program product for rendering images of a process control system (10), the computer program product comprising a data carrier (52) with the computer program code according to claim 15 or 16.
